# EUROPEAN PATENT SPECIFICATION

(11) **EP 4 398 014 B1**
(45) Date of publication and mention of the grant of the patent: **13.05.2026**
(21) Application number: 24150187.3
(22) Date of filing: 03.01.2024
(51) Int. Cl.: G02B 6/38

(54) **FIBER OPTIC CONNECTOR WITH ACTUATION ELEMENT AND METHOD OF INSTALLING THE SAME**
FASEROPTISCHER VERBINDER MIT BETÄTIGUNGSELEMENT UND INSTALLATIONSVERFAHREN DAFÜR
CONNECTEUR DE FIBRE OPTIQUE AVEC ÉLÉMENT D'ACTIONNEMENT ET SON PROCÉDÉ D'INSTALLATION

(30) Priority: 05.01.2023 US 202363437139 P
(43) Date of publication of application: 10.07.2024
(73) Proprietor: Corning Research & Development Corporation, Corning, New York 14831 (US)
(72) Inventor: MEEK, David Wayne, Keller, TX, 76248 (US); WEBB, Lee Alexander, Huntersville, NC, 28078 (US); LEYVA, JR., Daniel, Arlington, TX, 76017 (US)
(74) Representative: Reddie & Grose LLP

(56) References cited:
- WO-A1-2020/055439
- WO-A1-2021/243076
- WO-A1-2022/050224
- US-A1- 2010 215 323
- US-A1- 2016 018 606
- US-A1- 2019 154 922
- US-A1- 2021 302 666
- US-A1- 2021 405 304

## Description

### RELATED APPLICATIONS

This application claims the benefit of priority of U.S. Provisional Application No. 63/437,139, filed on January 5, 2023.

### FIELD

This disclosure relates generally to optical connectivity, and more particularly to fiber optic connectors having boots that can be moved to actuate another element of the fiber optic connector.

### BACKGROUND

Optical fibers are useful in a wide variety of applications, including the telecommunications industry for voice, video, and data transmissions. In a telecommunication system that uses optical fibers, there are typically many locations where fiber optic cables that carry the optical fibers connect to equipment or other fiber optic cables. To conveniently provide these connections, fiber optic connectors are often provided on the ends of fiber optic cables. The process of terminating the optical fiber(s) of a fiber optic cable is sometimes referred to as "connectorization." Connectorization can be done in a factory, resulting in a "pre-connectorized" or "pre-terminated" fiber optic cable, or the field (e.g., using a "field-installable" fiber optic connector).

Regardless of where termination occurs, a fiber optic connector ("connector") typically includes a ferrule with one or more bores that each receive an optical fibers. The ferrule supports and positions the optical fiber(s) with respect to a body of the connector. When the connector is inserted into an adapter to mate with another connector, a retention mechanism (e.g., latch) associated with the connector body engages the adapter to hold the connector in place. An alignment mechanism, such as a sleeve within the adapter, receives or otherwise positions the ferrule so that the optical fiber(s) in the ferrule can be aligned with the optical fiber(s) supported by a ferrule of the mating connector.

The connector body is sufficiently rigid so that the connector can withstand a variety of forces during use without affecting the optical connection that may be or has been established. Because the fiber optic cable on which a connector is installed typically has a much lower stiffness than the connector body, there is a potential for the cable to bend sharply at the back end of the connector body. Such bending may result in the cable having a bend radius less than a minimum bend radius that must be maintained for the optical fiber(s) within the cable to function properly (e.g., avoid excessive attenuation resulting from the bend radius). As a result, connectors typically include a strain-relieving boot that snaps onto the connector body and extends rearwardly over a portion of the cable. The boot is shaped and/or constructed (e.g., from flexible material) to reduce the potential for sharp bending and stress concentrations at the back of the connector body.

In some connectors, the boot may serve one or more additional purposes other than providing bending strain relief. For example, in some connectors, the boot may be used to actuate another element of the connector, such as an element that provides strain relief in an axial direction or an element that that serves as a latching feature of the connector. One example of latter is the NPC+ connector offered by Corning Optical Communication, LLC and generally disclosed in U.S. Patent Application Publication No. 2021/0405304 ("the '304 publication"). The NPC+ connector includes a factory-terminated stub optical fiber, and is configured to provide a mechanical splice between the stub optical fiber and an optical fiber from a cable ("cable optical fiber") that is inserted into the connector. The cable optical fiber extends through a boot, which can be slid to a forward position to actuate an element that clamps around a buffer-coated portion of the cable optical fiber. The clamping helps prevent axial forces from the cable optical fiber from being transferred to the stub optical fiber, thereby providing axial strain relief.

Although movable boots for actuation purposes may provide advantages, there remains room for improvement. For example, there may be the potential for such boots to move and prematurely actuate other elements during shipping, handling, or the like. Installation personnel may also unintentionally move the boot to prematurely actuate other elements. In field-installable connectors like the NPC+ connector referred to above, such premature actuation can make it impossible to fully insert the cable optical fiber into the connector. Even if the boot is moved back to a non-actuating position, the function of the connector may be compromised due to deformation of clamping members that were designed to only be actuated with a buffered optical fiber present.

US2016/018606A1 describes a connector for coupling with an adapter. The connector comprising at least one connector body each having a first end capable of being inserted into the adapter; at least one locking mechanism; and a boot movably engaged with the connector body. Each of the at least one locking mechanism comprising a slanting arm extending slantingly and upwardly from the respective connector body; at least one locking protrusion configured to extend from sides of the slanting arm to lock the connector body into locking grooves of the adapter; and a driving arm having a first end connected to the slanting arm, wherein a second end of the driving arm is connected to the boot and is movable together with the boot to drive the slanting arm connected with the first end of the driving arm to approach a horizontal direction. When an angle between the slanting arm and the horizontal direction becomes smaller than a predetermined angle, the locking protrusion starts to be separated from the locking groove of the adapter, so that an interlock between the connector body and the adapter is unlocked.

WO2020/055439A1 describes a connector assembly including a housing configured to accept a first ferrule and a second ferrule. The connector assembly may also have a push/pull clip that is configure to depress a protrusion that rotates down a connector device to remove the connector assembly from an adapter. The push/pull clip is integrated with a cable boot assembly that allows a user to apply a distal force to remove or insert the connector assembly into the adapter housing. The push/pull clip is configured for use to release a MPO and LC connector type from an adapter.

### SUMMARY

The invention is defined in the independent claims to which reference should now be made. Advantageous features are set forth in the dependent claims.

Embodiments of fiber optic connectors are provided in this disclosure. According to one embodiment, a fiber optic connector comprises a connector body having a front end and a back end, a boot having a rear portion extending beyond the back end of the connector body, wherein the boot is configured to move from a rearward position relative to the connector body to a forward position relative to the connector body; and an actuation element comprising a base and a lever coupled to the base, wherein the base of the actuation element is received over the rear portion of the boot and the back end of the connector body in an installed state. The actuation element prevents the boot from moving from a rearward position to the forward position in the installed state and the actuation element is removable from the boot to allow the boot to move from the rearward position to the forward position.

In some embodiments, the boot may also serve as an actuating mechanism for a clamping member, such as a buffer clamp. For example, in such embodiments, the fiber optic connector may further comprise a sleeve at least partially positioned within the connector body and configured to receive an optical fiber. The sleeve includes at least one clamping member configured to apply a clamping force to the optical fiber upon actuation when the optical fiber is disposed in the sleeve. The boot includes a front portion received over the sleeve, and the at least one clamping member of the sleeve is configured to be actuated by the boot when the boot moves from the rearward position to the forward position.

According to some embodiments, the fiber optic connector is a "mechanical splice connector" to be installed on an optical fiber of a cable ("cable optical fiber") in the field. For example, a fiber optic connector as described above may further comprise a ferrule supported within the connector body, a stub optical fiber secured to the ferrule, and a mechanical splice assembly at least partially received within the connector body. The stub optical fiber extends from a rear of the ferrule and terminates within the mechanical splice assembly. In some embodiments, the actuation element includes a base and a lever coupled to the base. The base is received over at least the rear portion of the boot. The lever is configured to press against the mechanical splice assembly to secure a mechanical splice between the stub optical fiber and the cable optical fiber. In some embodiments, the lever may also be configured to pivot relative to the base from a first position where the lever extends over the base to a second position where the lever extends away from the base and over the mechanical splice assembly.

Methods of installing fiber optic connectors like those mentioned above are also disclosed. According to some embodiments, a method of installing a fiber optic connector according to the preceding paragraph comprises: inserting a cable optical fiber through the boot and into the sleeve; removing the actuation element from the fiber optic connector; and moving the boot from the rearward position to the forward position to cause the at least one clamping member to apply the clamping force to the cable optical fiber.

Additional aspects of this disclosure will be set out in the detailed description which follows, and in part will be clear to those skilled in the technical field of optical connectivity. It is to be understood that the foregoing general description, the following detailed description, and the accompanying drawings are merely exemplary and intended to provide an overview or framework to understand the nature and character of the claims.

### BRIEF DESCRIPTION OF THE DRAWINGS

The accompanying drawings are included to provide a further understanding, and are incorporated in and constitute a part of this specification. The drawings illustrate one or more embodiment(s), and together with the description explain principles and operation of the various embodiments. Features and attributes associated with any of the embodiments shown or described may be applied to other embodiments shown, described, or appreciated based on this disclosure.
FIG. 1 is a perspective view of one example, not forming part of the claimed invention, of a known design for a fiber optic connector with a boot that is movable in an axial direction, wherein a dust cap actuator tool is mounted on the fiber optic connector.
FIG. 2 is a cross-sectional view of the fiber optic connector FIG. 1.
FIG. 3 is a schematic side view of an example optical fiber.
FIG. 4 is a perspective view of one example of an actuation element according to this disclosure.
FIG. 5 is a cross-sectional view of the actuation element of FIG. 4.
FIG. 6 is a perspective view of the same type of fiber optic connector that is shown in FIG. 1, but with the fiber optic connector including the actuation element of FIG. 4 rather than a dust cap actuator tool.
FIG. 7 is a perspective view of the fiber optic connector of FIG. 6 after moving a lever of the actuation element to actuate a mechanical splice assembly of the fiber optic connector.
FIG. 8 is an alternative perspective view of the fiber optic connector of FIG. 6 after moving the lever of the actuation element to actuate the mechanical splice assembly of the fiber optic connector.
FIG. 9 is a perspective view similar to FIG. 7, but illustrates the actuation element removed from the fiber optic connector.
FIG. 10 is a perspective view of a sub-assembly of the fiber optic connector of FIG. 6.
FIG. 11 is a perspective view similar to FIG. 10, but shows the boot being received on a portion of the sub-assembly, wherein the boot is in a rearward position so that clamping members on the sub-assembly are not actuated by the boot.
FIG. 12 is a perspective view similar to FIG. 11, but shows the boot moved to a forward position so that the clamping members are actuated.
FIG. 13 is an enlarged perspective view of a portion of the fiber optic connector of FIG. 6 without the actuation element, and specifically a back portion of a connector body and a boot of the fiber optic connector.
FIG. 14 is a perspective view of the boot of the fiber optic connector of FIG. 6.
FIG. 15 is a perspective view of a fiber optic connector and actuation element according to another embodiment of this disclosure.
FIG. 16 is a perspective view of the actuation element of FIG. 15 in a different orientation so that an underside of the actuation element is better shown.
FIGS. 17 and 18 are side views schematically illustrating the actuation element of FIG. 15 being installed on the fiber optic connector when the boot is in the forward position.
FIG. 19 is a perspective view of a portion of the fiber optic connector of FIG. 16 without the actuation element.
FIG. 20 is a side view schematically illustrating how the actuation element of FIG. 15 being installed on the fiber optic connector causes the boot to move back toward the rearward position.

### DETAILED DESCRIPTION

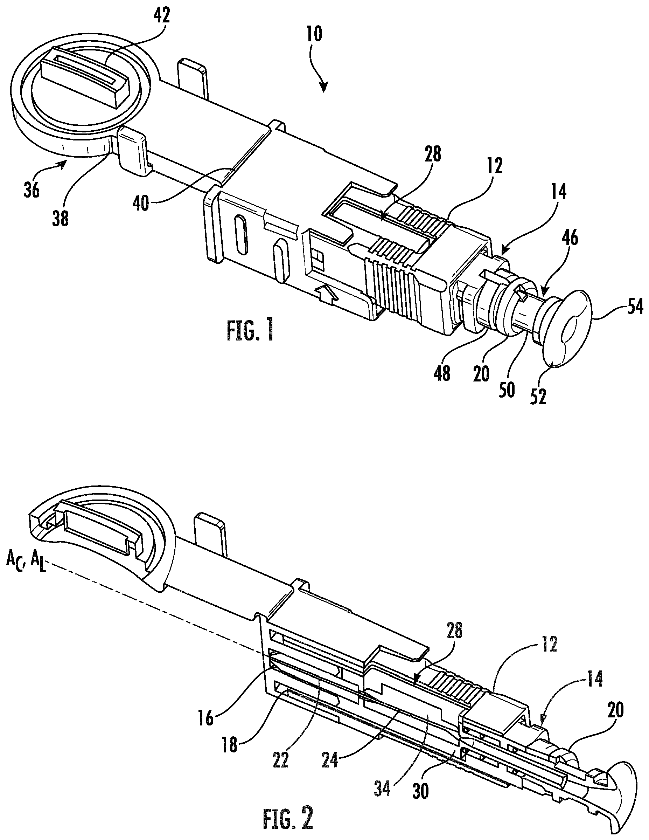

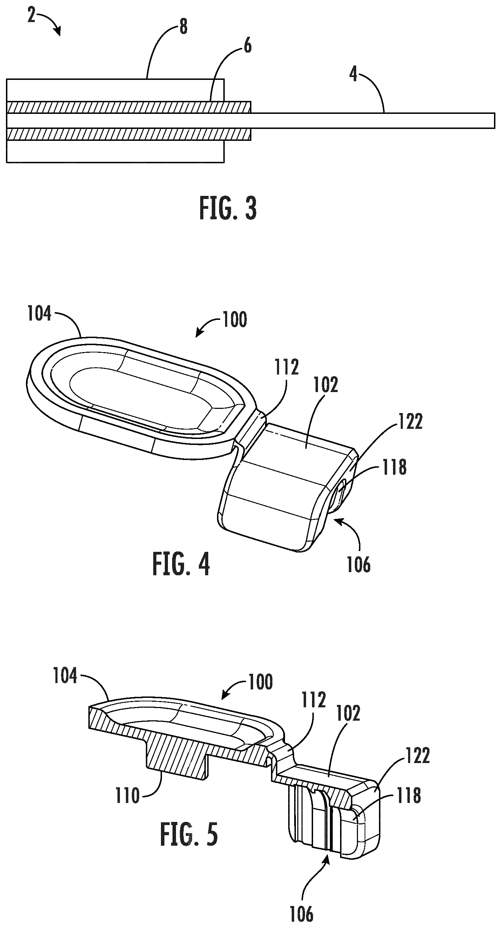

Various embodiments will be clarified by examples in the description below. In general, the description relates to fiber optic connectors having movable boots and methods of installing the same. As mentioned in the Background section above, examples of fiber optic connectors that include a movable boot are generally disclosed in U.S. Patent Application Publication No. 2021/0405304 ("the '304 publication"). The fiber optic connectors in the '304 publication also be considered as examples of fiber optic connectors for this disclosure. Accordingly, one example from the '304 publication will be described here to provide context for aspects of this disclosure. To this end, FIGS. 1-3 of this disclosure correspond to FIGS. 1-3 of the '304 publication. FIGS. 1 and 2 illustrate a fiber optic connector 10 ("connector 10"), and FIG. 3 illustrates one example of an optical fiber 2 intended to be terminated by the connector 10.

The connector 10 is an SC-type connector according to according to IEC 61754-4:2013, although this disclosure may be applicable to other connector types, such as LC (e.g., according to IEC 61754-20:2012) and ST-type connectors (e.g., according to IEC 61754-2:1996). The connector 10 will be described as having components designed to assist installation of the connector 10 in the field, but this disclosure is not limited to field-installable connectors.

The optical fiber 2 is shown in FIG. 3 as including a bare glass portion 4, a coated portion 6, and a buffer portion 8. As is conventional, the bare glass portion 4 may have a diameter of about 125 microns. The coated portion 6 may comprise one or more polymer coating layers (e.g. acrylic material) that increase the diameter of the optical fiber 2, such as to about 200 microns or about 250 microns. The buffer portion 8 typically includes a layer of polymer material that is more rigid than the material that defines the coated portion 6 to provide increased mechanical strength/protection, and typically increases the diameter of the optical fiber 2 to about 900 microns. The term "optical fiber" in this disclosure may refer to a bare glass optical fiber with or without polymer coating layers.

FIG. 3 illustrates the coated portion 6 extending beyond the buffer portion 8, and the bare glass portion 4 extending beyond the coated portion 6. This may be a result of stripping lengths of material associated with the buffer portion 8 to expose the coated portion 6, and lengths of material associated with the coated portion 6 to expose an end section of the bare glass portion 4. In some embodiments, the layer(s) of material(s) associated with the coated portion 6 may have the same "strip length" as the material(s) associated with the buffer portion 8 such that the coated portion 6 does not extend beyond the buffer portion 8. Furthermore, although a buffer portion 8 is shown in FIG. 3, this disclosure includes aspects applicable to connectors installed on optical fibers that may not include a buffer portion. The optical fiber 2 may be associated with a cable and, for convenience, will be referred to as "cable optical fiber 2" below.

Referring back to FIGS. 1 and 2, the connector 10 includes an outer shroud or shell 12, a connector body 14 (also referred to as "connector housing 14") partially within the shell 12, and a ferrule 16 partially within the connector body 14. More specifically, the connector body 14 has a front end 18 and a back end 20. The ferrule 16 has a rear portion retained or otherwise supported within the connector body 14 and a front portion extending beyond the front end 18 of the connector body 14. Additionally, the ferrule 16 includes a ferrule bore 22 extending along a central axis A_{C}, which is generally the same (or at least parallel to) a longitudinal axis A_{L} of the connector 10.

In this disclosure, references to movement in an "axial direction" or "axially" refer to movement along or parallel to the longitudinal axis A_{L} of the connector 10. Additionally, the terms "forward" and "rearward" (or "backward") are relative terms using the orientation of the connector 10 as a reference. The end of the ferrule 16 projecting beyond the connector body 14 is considered to define a front of the connector 10, and the opposite end of the connector 10 along the longitudinal axis A_{L} is then considered to be a rear/back of the connector 10. Thus, a forward direction or position is one more toward the front of the connector 10, and a rearward direction or position is one more toward the rear of the connector 10.

In the particular embodiment shown, the ferrule 16 is intended to support a stub optical fiber 24, which is a short length of optical fiber. The stub optical fiber 24 may be secured to and polished with the ferrule 16 in a factory so that these steps need not be performed by a technician in the field. Instead, the connector body 14 is designed to accommodate a mechanical splice between a back end of the stub optical fiber 24 and an end of the cable optical fiber 2 (FIG. 3). To this end, the connector 10 further includes a mechanical splice assembly 28 at least partially received within the connector body 14. The mechanical splice assembly 28 is held/supported within the connector body 14 by a sleeve 30 (also referred to as "collar 30") that also supports the rear portion of the ferrule 16. Various mechanical splice assembly designs for field-installable connectors are known. The mechanical splice assembly 28 in the embodiment shown may, for example, be like those described in U.S. Patent Nos. 7,280,733 and 7,775,726 (respectively "the '733 patent" and "the '726 patent").

The mechanical splice assembly 28 includes an actuating cap 32 that is designed to be pressed downward (i.e., toward the longitudinal axis A_{L}) to actuate a gripping element 34. As described in the '733 patent and the '726 patent, the gripping element 34 may be a sheet of ductile material that is folded to define a hinge and two legs extending upwards. The actuating cap 32 is positioned over the legs, but has an initial position where the legs extend slightly away from each other. The cable optical fiber 2 can be inserted into the back of the connector 10 and advanced to abut the back end of the stub optical fiber 24 in the space between the legs of the gripping element 34. Pushing the actuating cap 32 results in cam bars on an interior of the actuating cap 32 sliding over the legs, urging them legs toward one another. The result is a clamping force that secures the mechanical splice between the stub optical fiber 24 and cable optical fiber 2.

In FIGS. 1 and 2, the connector 10 is shown with a dust cap actuator tool 36 that may be used to push the actuating cap 32. Such a tool is described in U.S. Patent No. 10,185,102 ("the '102 patent"). The dust cap actuator tool 36 includes a lever 38 (or "cap actuator 38") that can be pivoted about a living hinge 40 so that a force concentration element 42 on the lever 38 ultimately presses on the actuating cap 32. Although the actuating cap 32 may apply some clamping force to the cable optical fiber 2 that is inserted into the mechanical splice assembly 28 from the back of the connector 10, the connector 10 also includes a boot 46 configured to apply additional clamping force to the cable optical fiber 2. More specifically, the boot 46 includes a front portion 50 disposed within and coupled to a rear portion 48 ("backbone 48") of the connector body 14. The boot 46 also includes a rear portion 52 that extends beyond the back end 20 of the connector body 14 and that defines a boot back end 54. The rear portion 52 in the embodiment shown is funnel-shaped for reasons disclosed in the '304 publication referred to above. As described in the '304 publication and referred to below, the boot 46 may be pushed along the longitudinal axis A_{L} of the connector 10 to a forward position to assist with retaining the cable optical fiber 2 in the connector 10.

In the embodiment shown in FIGS. 1 and 2, the dust cap actuator tool 36 does not prevent a technician from moving the boot 46 from its rearward position to its forward position. This creates the potential for the boot 46 to be moved in such a manner prior to inserting the cable optical fiber 2 through the boot 46 and into the mechanical splice assembly 28, and prior to securing the mechanical splice with the stub optical fiber 24. As disclosed in the '304 publication and discussed below, the boot 46 deforms one or more clamping member(s) on the sleeve 30 when the boot 46 is moved to its forward position. Deforming the clamping member(s) prior to inserting the cable optical fiber 2 may compromise the functionality of the connector 10. For example, it may not be possible to insert the cable optical fiber 2 through the sleeve 30 and into the mechanical splice assembly 28, even if the boot 46 is moved back to its rearward position, due to the prior deformation of the clamping member(s).

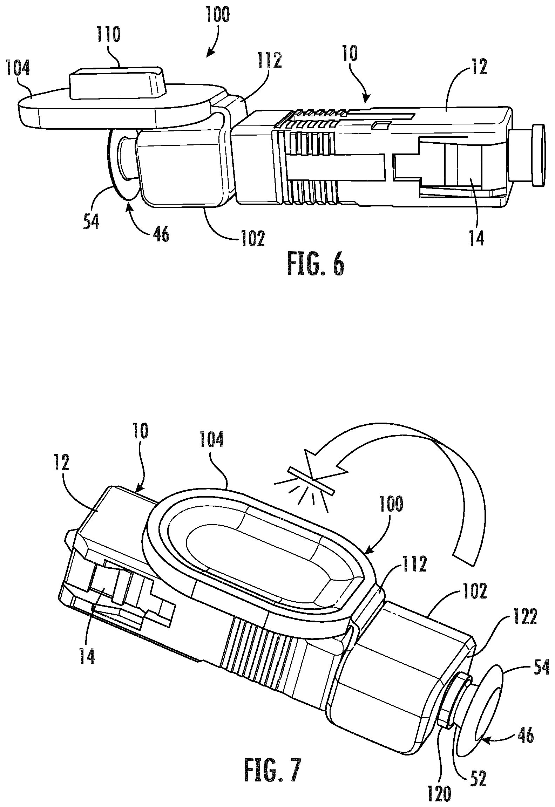

One way to address the issue mentioned above is to provide the actuation element 100 shown in FIGS. 4 and 5 instead of the dust cap actuator tool 36 shown in FIGS. 1 and 2. The actuation element 100 includes a base 102 and a lever 104 coupled to the base 102. The base 102 defines a channel 106 that is open on a bottom side 108 of the actuation element 100 so that the actuation element 100 is received over a portion of the connector 10. Like the lever 38, the lever 104 includes a force concentration member 110 for pressing the actuating cap 32. These aspects can be better appreciated with reference to FIGS. 6-9.

As shown in FIG. 6, the connector 10 is provided with the actuation element 100 pre-installed (e.g, by the manufacturer of the connector 10). The base 102 of the actuation element 100 is received over the rear portion 52 of the boot 46 and the back end 20 of the connector body 14 in the installed state. In some embodiments, the actuation element 100 may be designed to be received over just the rear portion 52 of the boot 46. The actuation element 100 need not cover the entire rear portion 52 of the boot 46, as shown. The lever 104 initially extends over the base 102 to project in a rearward direction, with the force concentration member 110 facing a direction away from the base 102. The lever 104 is coupled to the base 102 by a living hinge 112 such that the base 102 and the lever 104 are integrally formed as a unitary structure. In other embodiments, the base 102 and the lever 104 may be separate elements that are pivotally coupled by a hinge fastener or the like.

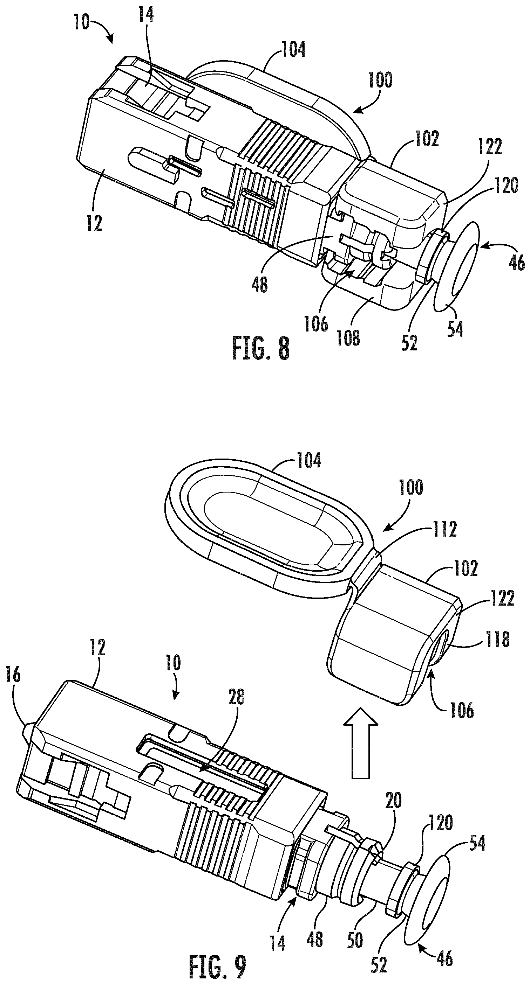

As shown in FIGS. 7 and 8, the lever 104 may be pivoted relative to the base 102 from the initial position (referred to in this disclosure as a "first position") to a position where the lever 104 extends away from the base 102 and over the mechanical splice assembly 28 (referred to in this disclosure as a "second position"). The second position may be one in which the lever 104 presses against the mechanical splice assembly 28, thereby causing the actuating cap 32 of the mechanical splice assembly 28 to move toward the longitudinal axis A_{L} and actuate the gripping element 34. Thus, a method of installing the connector 10 may involve preparing the cable optical fiber 2 (FIG. 3) for insertion into the connector 10, completing such insertion, and then moving the lever 104 from the first position to the second position.

More specifically, and with additional reference back to FIG. 3, a technician may first cleave the cable optical fiber 2 and strip an appropriate length of coating layer material and/or buffer layer material (if present) to expose an end section of the bare glass portion 4. The technician can then insert the prepared (e.g., stripped and cleaved) cable optical fiber 2 into the connector 10 through the boot back end 54. The insertion continues until the exposed end section of the bare glass portion 4 advances into the mechanical splice assembly 28 to abut the end of the stub optical fiber 24 (FIG. 2). Either before or after inserting the cable optical fiber 2, the technician moves the lever 104 toward its second position so that the force concentration member 110 is positioned over the actuating cap 32 of the mechanical splice assembly 28. With the lever 104 positioned in such a manner and the cable optical fiber 2 inserted as described above, the technician can then squeeze the lever 104 and the connector 10 so that the force concentration member 110 moves the actuating cap 32 downward. The result is ultimately a clamping force that secures the mechanical splice between the stub optical fiber 24 and the cable optical fiber 2. The arrow and symbol above the connector 10 in FIG. 7 represent how there may be a tactile and, in some embodiments, audible feedback that the actuating cap 32 has been fully actuated.

When the actuation element 100 is positioned on the connector 10, the actuation element 100 prevents the boot 46 from moving from its rearward position to its forward position. This can be best appreciated with reference to FIG. 8, which shows how the channel 106 in the base 102 of the actuation element 100 may be shaped to correspond to the geometry of the rear portion 48 of the connector body 14. The rear portion 48 and the channel 106 include sections of different width/diameter such that relative axial movement between the rear portion 48 and the base 102 is limited/constrained. The actuation element 100 is effectively held in place in the axial direction. Additionally, a portion of the base 102 is positioned axially between the back end 20 of the connector body 14 and a feature of the boot 46 that is larger than a channel opening 118 of the channel 106. In the embodiment shown, the rear portion 52 of the boot 46 includes a flange 120 positioned adjacent the channel opening 118 of the channel 106, with the flange 120 being larger than the channel opening 118. The boot 46 cannot be moved to its forward position because the flange 120 comes into contact with a wall 122 of the base 102, thereby preventing further relative movement. In some embodiments, there may not be any relative movement between the boot 46 and the actuation element 100 when the actuation element 100 is received on the connector 10.

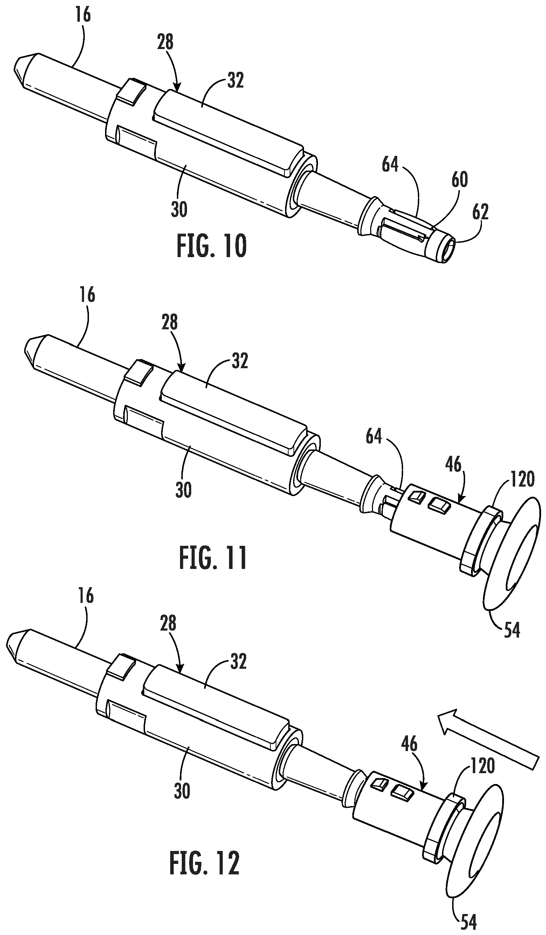

As shown in FIG. 9, eventually the technician can remove the actuation element 100 from the connector 10. This step may be performed without needing any additional tools. With the actuation element 100 removed, the boot 46 is now free to move to its forward position in the manner described in the '304 publication. Thus, the technician can slide the boot 46 to its forward position to actuate the clamping member(s) of the sleeve 30. This aspect can be better appreciated with reference to FIGS. 10-12. In particular, FIG. 10 illustrates a sub-assembly of the connector 10 that includes the ferrule 16, sleeve 30, and mechanical splice assembly 28. The sleeve 30 includes a buffer clamping portion 60 proximate to (and defining) a back end 62 of the sleeve 30. The buffer clamping portion 60 houses or otherwise includes one or more clamping member(s) designed to be actuated when the boot 46 (not shown in FIG. 10) is moved from its rearward position to its forward position. In the embodiment shown, the buffer clamping portion 60 includes clamping members in the form of walls 64 that are bowed radially outward relative to the longitudinal axis A_{L} of the connector 10. The walls 64 are positioned within the connector body 14 when the connector 10 is fully assembled.

FIG. 11 is similar to FIG. 10, but shows the front portion 50 of the boot 46 received over a short length of the buffer clamping portion 60 of the sleeve 30. FIG. 10 corresponds to the boot 46 being in its rearward position. In this position, the walls 64 of the buffer clamping portion 60 remain bowed. Additionally, an internal passage defined within the buffer clamping portion 60 is large enough to accommodate the buffer portion 8 (FIG. 3) of the cable optical fiber 2. This allows the cable optical fiber 3 to be fully inserted into the connector 10 to form the mechanical splice with the stub optical fiber 24.

FIG. 12 shows the boot 46 moved along the longitudinal axis A_{L} to its forward position. The boot 46 flexes the walls 64 of the buffer clamping portion 60 radially inward as a result of this movement, and thereby causes the walls 64 of the buffer clamping portion 60 to exert a clamping force against the cable optical fiber 2 that has been inserted into to the sleeve 30 (and specifically against the buffer portion 8 of the cable optical fiber 2 within the sleeve 30). These and other buffer clamping mechanisms are described in the '102 patent referred to above. Accordingly, reference can be made to the '102 patent for a better understanding of these aspects.

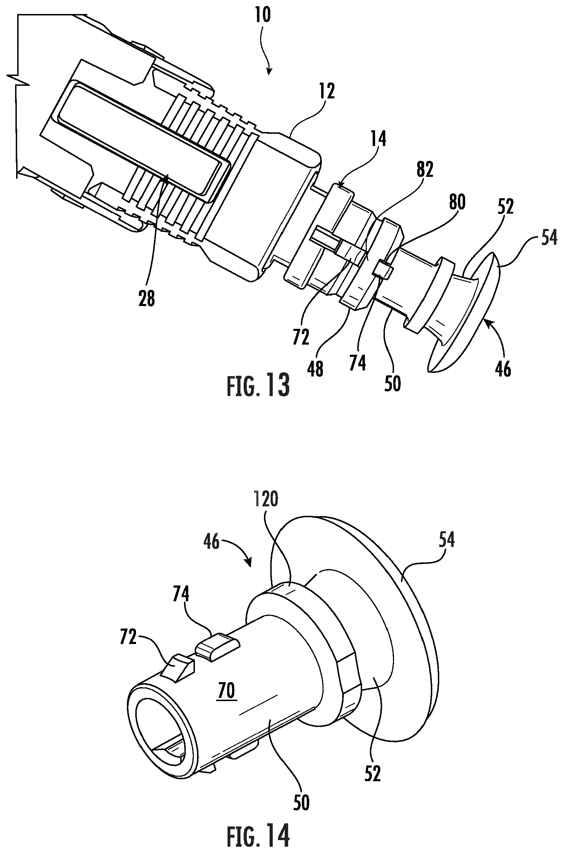

The boot 46 in the embodiment shown includes various features that help couple the boot 46 to the connector body 14 in both the rearward and forward position of the boot 46. In particular, and with reference to FIGS. 13 and 14, the front portion 50 of the boot 46 includes an exterior surface 70, at least one first engagement feature 72 extending radially outward from the exterior surface 70 at a first axial location, and at least one second engagement feature 74 extending radially outward from the exterior surface at a second axial location. The backbone 48 of the connector body 14 includes at least one slot 80 and a rib 82 that cooperate with the first engagement feature(s) 72 and the second engagement feature(s) 74 to couple the boot 46 to the connector body 14. These aspects are described in further detail in the '304 publication and need not be repeated in this disclosure.

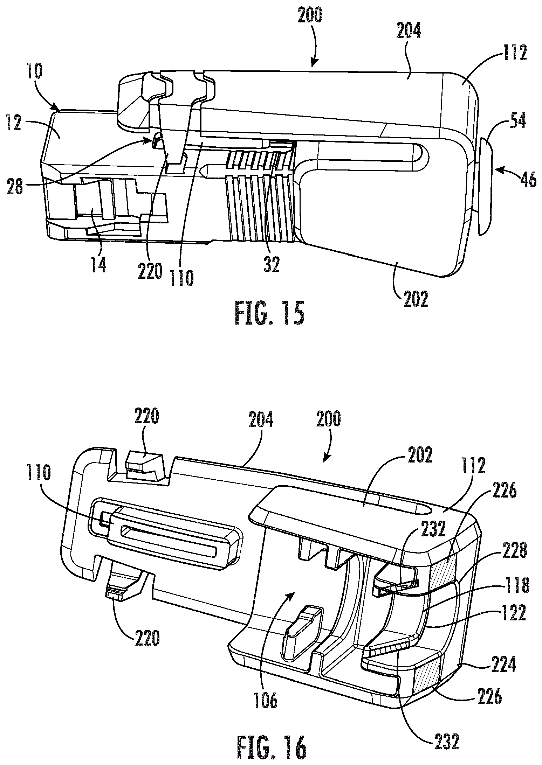

Indeed, as can be appreciated, the present disclosure relates to new actuation elements rather than new boot designs. The actuation element 100 discussed above is merely one example, but persons skilled in optical connectivity will appreciate many variations from this disclosure. For example, FIG. 15 illustrates the connector 10 with an actuation element 200 according to an alternative embodiment of this disclosure installed on the connector 10. Like the actuation element 100, the actuation element 200 includes a base 202 and a lever 204 coupled to the base 202. The base 202 may function similar to the base 102 in terms of preventing the boot 46 from moving to its forward position, and the lever 204 may function similar to the lever 104 in terms of being able to press the actuating cap 32 downward. Accordingly, in FIG. 16 similar reference numbers are used to features that correspond to those discussed in connection with the actuation element 100, such as the channel 106, force concentration member 110, channel opening 118, and wall 122. Only the differences from the actuation element 100 will be described further.

In this regard, FIGS. 15 and 16 illustrate how in the actuation element 200, the lever 204 extends over the base 202 to project in a forward direction. Such an arrangement results in the force concentration member 110 already being positioned above mechanical splice assembly 28, confronting/facing the actuating cap 32. The lever 204 in the embodiment shown includes two positioning members 220 that project further than the force concentration member 100 and that engage portions of the connector 10 adjacent the actuating cap 32 (specifically, portions of the outer shroud 12 in the embodiment shown), which helps prevent the force concentration member 110 inadvertently pressing the actuating cap 32 downward. A technician must instead press the lever 204 sufficiently to cause the positioning members 220 to flex outwards (e.g., over edges and/or along sides of the outer shroud 12), which in turn allows the lever 204 and its force concentration member 210 to move further downward and thereby press the actuating cap 32 downward. Thus, the position members 220 provide some initial resistance that must be overcome before the actuating cap 32 is pressed downward by the force concentration member 110. Although two positioning members 220 are provided in the embodiment shown, in alternative embodiments there may be a single positioning member, more than two positioning members, or no positioning members.

As can be appreciated, despite the lever 204 not needing to pivot relative to the base 202 from a position that is not over the mechanical splice assembly 28, there is still at least some degree of pivoting to allow the downward movement referred to above. Accordingly, the lever 204 can still be considered as being coupled to the base 202 by a living hinge 112. In alternative embodiments, however, the lever 204 may just be an extension from the base 202 that is configured to flex downward to press the actuating cap 32 in the manner described above.

Referring specifically to FIG. 16, the base 202 in the embodiment shown is designed such that the wall 122 is recessed relative to a back end 224 of the base 202. The back end 224 defines back ramp surfaces 226 on opposite sides of a back opening 228 for reasons that will be discussed below. The region of the base 202 between the wall 122 and the back opening 228 is shaped large enough to receive the flange 120 (FIG. 14) of the boot 46. However, the wall 122 that is recessed relative to the back end 224 is still configured to block forward movement of the flange 120 (and, therefore, the boot 46 as a whole) when the actuation element 200 is installed, as discussed above in connection with the actuation element 100.

As shown in FIG. 16, the wall 122 extends substantially perpendicular to a longitudinal axis of the channel 106. The wall 122 only defines a top portion of the channel opening 118 in the embodiment shown, as a bottom portion of the channel opening 118 is defined inner ramp surfaces 232 that extend downward and axially away from the wall 122. As can be appreciated from FIG. 16, the inner ramp surfaces 232 effectively define ramps that lead to the wall 122 at an angle that is not perpendicular to the longitudinal axis of the channel 106. The inner ramp surfaces 232, and the back ramp surfaces 226 mentioned above, may facilitate "resetting" the boot 46 by re-installing the actuation element 100 after the boot 46 has been moved to its forward position. In other words, the actuation element 200 may be re-installed to help move the boot 46 from its forward position back to its rearward position. Resetting the boot 46 to its rearward position may be desirable, for example, if a technician does not correctly install the connector 10 on a cable optical fiber 2. The technician's first attempt might not have established an acceptable mechanical splice between the stub optical fiber 24 (see e.g. FIG. 2) and the cable optical fiber 2, or there may be another source of unacceptable attenuation that makes it desirable for the technician to reattempt a termination process with the cable optical fiber 2 and the connector 10.

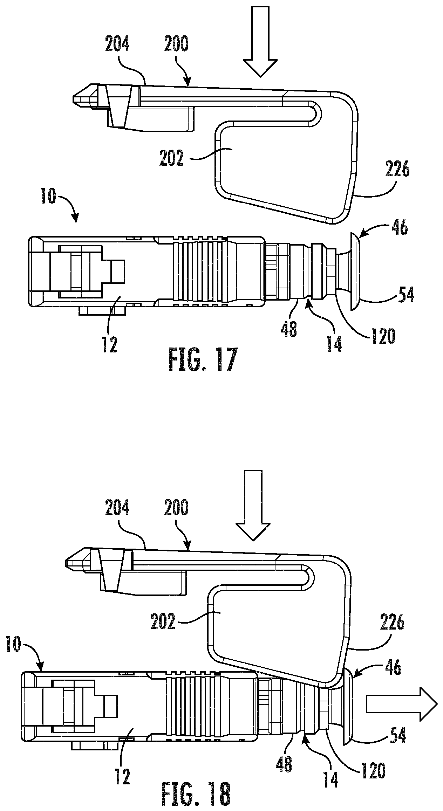

To this end, FIGS. 17 and 18 illustrate an example process of re-installing the actuation element 200. The connector 10 is shown with the boot 46 in the forward position, which would be the case after completing a termination process. A cable optical fiber 2 on which the connector 10 is installed is not shown to simplify the figures. To reset the boot 46, and as shown in FIG. 17, the actuation element 200 is first positioned over the connector 10 with the base 202 above the back end 20 of the connector body 14 and above the rear portion 52 of the boot 46. FIG. 18 illustrates how moving the base 202 toward the connector 100 may result in the back ramp surfaces 226 (see FIG. 16) coming into contact with the boot back end 54. The back ramp surfaces 226 are configured to translate downward forces into axial forces that begin to push the boot 46 rearward, as schematically illustrated by the arrows in FIG. 18. In other words, as the back ramp surfaces 226 are pushed down, the boot back end 54 travels along the back ramp surfaces 226, which are shaped to push the boot back end 54 rearward.

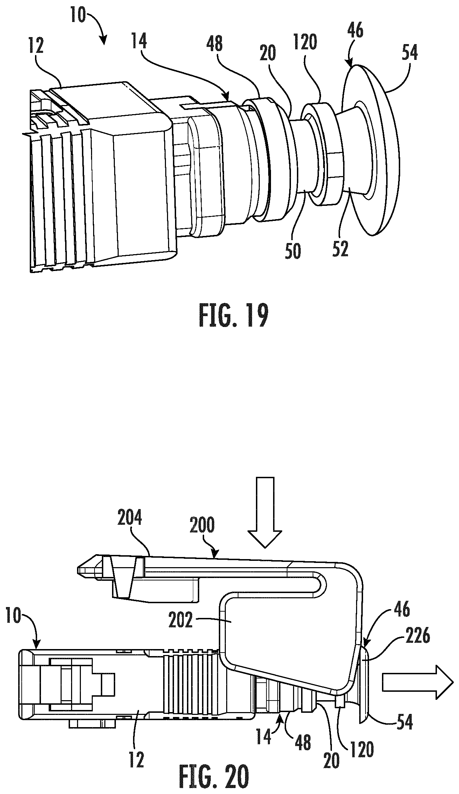

After the base 202 of the actuation element 200 pushes the boot 46 rearward an initial amount, the flange 120 of the boot 46 becomes spaced further from the back end 20 of the connector body 14. FIG. 19 illustrates such an arrangement, with the actuation element 200 omitted to better view the position of the boot 46 relative to the connector body 14. As can be seen, a gap now exists between the flange 120 and back end 20. The inner ramp surfaces 232 (FIG. 16) can then be received in the gap and used to further assist pushing the boot 46 rearward, as illustrated in FIG. 20. More specifically, as the base 202 of the actuation element 200 is pushed further down, the inner ramp surfaces 232 contact a front edge of the flange 120 and push the flange 120 (and, therefore, the boot 46 in general) rearward. The boot 46 is pushed all the way back its rearward position by the time the actuation element 200 is fully re-installed, essentially resulting in the arrangement shown in FIG. 15.

Other variations will be appreciated by persons skilled in optical connectivity. For example, although the connector 10 described above may be a "field-installable" connector that is based on mechanical splicing principles, the concepts of this disclosure may be applicable to other types of field-installable connectors (e.g., fusion splice connectors, epoxy- and-polish connectors, etc.) or factory-installable connectors. As a specific example of the latter, embodiments are contemplated where the cable optical fiber 2 is inserted into a connector (not shown) until the bare glass portion 4 resides in a ferrule bore (e.g., similar to the ferrule bore 22). The bare glass portion 4 may be secured to the associated ferrule using a bonding agent (e.g., epoxy), as is well-known. In such embodiments, the connector may not include a component like the mechanical splice assembly 28, and an actuation element according to this disclosure may not include a lever.

Additionally, although the connector 10 described above includes a sleeve 30 with a buffer clamping portion that is actuated by the boot 46, the concepts of this disclosure may be applicable connector designs where a boot alternatively or additionally actuates other elements when moving from a rearward position to a forward position. For example, various connector designs are known where a boot moves in an axial direction to actuate one or more latching elements of the connector. Actuation elements according to this disclosure are not limited to embodiments for mechanical splice connectors; features like the lever 104 may not be required in some embodiments.

## Claims

1. A fiber optic connector (10) for an optical fiber (2), the fiber optic connector comprising:
a connector body (14) having a front end (18) and a back end (20);
a boot (46) having a rear portion (52) extending beyond the back end (20) of the connector body (14), wherein the boot (46) is configured to move from a rearward position relative to the connector body (14) to a forward position relative to the connector body (14); and
an actuation element (100, 200) comprising a base (102, 202) and a lever (104, 204) coupled to the base (102, 202), wherein the base of the actuation element (100, 200) is received over the rear portion (52) of the boot (46) and the back end (20) of the connector body (14) in an installed state, **characterized in that**
the actuation element (100, 200) prevents the boot (46) from moving from the rearward position to the forward position in the installed state, and **in that** the actuation element (100, 200) is removable from the boot (46) to allow the boot (46) to move from the rearward position to the forward position.

2. The fiber optic connector of claim 1, further comprising:
a sleeve (30) at least partially positioned within the connector body and configured to receive the optical fiber, wherein the sleeve includes at least one clamping member configured to apply a clamping force to the optical fiber upon actuation when the optical fiber is disposed in the sleeve, and further wherein:
the boot further includes a front portion (50) received over the sleeve, and
the at least one clamping member of the sleeve is configured to be actuated by the boot when the boot moves from the rearward position to the forward position.

3. The fiber optic connector of claim 2, wherein the front portion of the boot is received over the sleeve within the connector body.

4. The fiber optic connector of any of claims 1-3, wherein the actuation element received over the back end of the connector body and the rear portion of the boot.

5. The fiber optic connector of any of claims 1-4, wherein the actuation element includes a bottom side (108) and defines a channel (106) that is open on the bottom side to allow the actuation element to be received over at least the rear portion of the boot.

6. The fiber optic connector of claim 5, wherein the rear portion of the boot defines a boot back end (54) and includes a flange (120) that is spaced from the boot back end, and further wherein the channel of the actuation element includes a channel opening (118) that is sized to prevent the flange from entering the channel.

7. The fiber optic connector of any of claims 2-6, wherein the optical fiber is a cable optical fiber that includes a bare glass portion (4) and a buffer portion (8), and wherein fiber optic connector further comprises:
a ferrule (16) supported within the connector body, wherein the ferrule extends beyond the front end of the connector body;
a stub optical fiber (24) secured to the ferrule;
a mechanical splice assembly (28) at least partially received within the connector body, wherein the stub optical fiber extends from a rear of the ferrule and terminates within the mechanical splice assembly, wherein:
the sleeve is configured to receive the buffer portion of the cable optical fiber and the at least one clamping member is configured to apply a clamping force to the buffer portion of the cable optical fiber upon actuation when the buffer portion of the cable optical fiber is disposed in the sleeve.

8. The fiber optic connector of claim 7, wherein:
the mechanical splice assembly is configured to receive the bare glass portion of the cable optical fiber so that the bare glass portion can abut an end of the stub optical fiber; and
the lever is configured to press against the mechanical splice assembly to cause the mechanical splice assembly to securely grip the stub optical fiber and the bare glass portion of the cable optical fiber when the bare glass portion is received in the mechanical splice assembly and abutted against the end of the stub optical fiber.

9. The fiber optic connector of claim 8, wherein the lever is configured to pivot relative to the base from a first position where the lever extends over the base to a second position where the lever extends away from the base and over the mechanical splice assembly.

10. The fiber optic connector of claim 8 or 9, wherein the lever of the actuation element is coupled to the base by a living hinge such that the lever and the base are integrally formed as a unitary structure.

11. The fiber optic connector of any of claims 1-10, wherein the boot is coupled to the connector body in both the rearward position and the forward position.

12. A method of installing a fiber optic connector that includes a connector body (14) having a front end (18) and a back end (20), a sleeve (30) at least partially positioned within the connector body (14), a boot (46) having a front portion received over the sleeve (30) and a rear portion (52) extending beyond the back end (20) of the connector body (14), and an actuation element (100, 200) comprising a base (102, 202) and a lever (104, 204) coupled to the base (102, 202), wherein the base of the actuation element (100, 200) is received over the rear portion (52) of the boot (46) and the back end (20) of the connector body (14) in an installed state, and wherein the actuation element (100, 200) prevents the boot (46) from moving from a rearward position relative to the connector body (14) to a forward position relative to the connector body (14) in the installed state, the method comprising:
inserting a cable optical fiber (2) through the boot (46) and into the sleeve (30), wherein the sleeve (30) includes at least one clamping member configured to apply a clamping force to the optical fiber (2) upon actuation by the boot (46) moving from a rearward position relative to the connector body (14) to a forward position relative to the connector body (14), and wherein the actuation element (100, 200) prevents the boot (46) from moving from the rearward position to the forward position while inserting the cable optical fiber (2);
removing the actuation element (100, 200) from the fiber optic connector (10); and
moving the boot (46) from the rearward position to the forward position to cause the at least one clamping member to apply the clamping force to the cable optical fiber.

13. The method of claim 12, wherein the connector further includes a ferrule (16) supported within the connector body and extending beyond the front end of the connector body, a stub optical fiber (24) secured to the ferrule, and a mechanical splice assembly (28) at least partially received within the connector body, and wherein the stub optical fiber extends from a rear of the ferrule and terminates within the mechanical splice assembly, the method further comprising:
inserting the cable optical fiber into the mechanical splice assembly to abut an end of the stub optical fiber; and
thereafter, using the actuation element to cause the mechanical splice assembly to securely grip the stub optical fiber and the cable optical fiber and thereby secure a mechanical splice between the end of the stub optical fiber and the cable optical fiber,
wherein the actuation element is removed from the fiber optic connector after securing the mechanical splice.

14. The method of claim 13, wherein:
the cable optical fiber comprises a bare glass portion (4) and a buffer portion (8);
the bare glass portion is inserted into the mechanical splice assembly to abut the end of the stub optical fiber; and
the at least one clamping member applies a clamping force to the buffer portion of the cable optical fiber upon actuation by the boot.

15. The method of claim 14, wherein:
using the actuation element to cause the mechanical splice assembly to securely grip the stub optical fiber and the cable optical fiber comprises pressing the lever against the mechanical splice assembly.

## Patentansprüche

1. Faseroptischer Verbinder (10) für eine optische Faser (2), wobei der faseroptische Verbinder Folgendes umfasst:
einen Verbinderkörper (14) mit einem vorderen Ende (18) und einem hinteren Ende (20);
eine Manschette (46) mit einem hinteren Teil (52), der sich über das hintere Ende (20) des Verbinderkörpers (14) hinaus erstreckt, wobei die Manschette (46) zum Bewegen von einer rückwärtigen Position relativ zum Verbinderkörper (14) zu einer vorderen Position relativ zum Verbinderkörper (14) konfiguriert ist; und
ein Betätigungselement (100, 200), das eine Basis (102, 202) und einen mit der Basis (102, 202) gekoppelten Hebel (104, 204) umfasst, wobei die Basis des Betätigungselements (100, 200) in einem installierten Zustand auf den hinteren Teil (52) der Manschette (46) und das hintere Ende (20) des Verbinderkörper (14) aufgenommen ist, **dadurch gekennzeichnet, dass**
das Betätigungselement (100, 200) die Manschette (46) im installierten Zustand hindert, sich von der rückwärtigen Position zu der vorderen Position zu bewegen, und dass
das Betätigungselement (100, 200) von der Manschette (46) abnehmbar ist, damit die Manschette (46) sich von der rückwärtigen Position zu der vorderen Position bewegen kann.

2. Faseroptischer Verbinder nach Anspruch 1, ferner umfassend:
eine Hülse (30), die mindestens teilweise in dem Verbinderkörper positioniert ist und zum Aufnehmen der optischen Faser konfiguriert ist, wobei die Hülse mindestens ein Klemmelement aufweist, das zum Anwenden einer Klemmkraft auf die optische Faser bei Betätigung konfiguriert ist, wenn die optische Faser in der Hülse angeordnet ist, und ferner wobei:
die Manschette ferner einen vorderen Teil (50), der auf der Hülse aufgenommen ist, aufweist und
das mindestens eine Klemmelement der Hülse konfiguriert ist, um von der Manschette betätigt zu werden, wenn sich die Manschette von der rückwärtigen Position zu der vorderen Position bewegt.

3. Faseroptischer Verbinder nach Anspruch 2, wobei der vordere Teil der Manschette auf der Hülse in dem Verbinderkörper aufgenommen ist.

4. Faseroptischer Verbinder nach einem der Ansprüche 1 bis 3, wobei das Betätigungselement auf dem hinteren Ende des Verbinderkörpers und dem hinteren Teil der Manschette aufgenommen ist.

5. Faseroptischer Verbinder nach einem der Ansprüche 1 bis 4, wobei das Betätigungselement eine Unterseite (108) aufweist und eine Auskehlung (106) definiert, die an der Unterseite offen ist, so dass das Betätigungselement mindestens auf dem hinteren Teil der Manschette aufgenommen werden kann.

6. Faseroptischer Verbinder nach Anspruch 5, wobei der hintere Teil der Manschette ein hinteres Manschettenende (54) definiert und einen Flansch (120) aufweist, der vom hinteren Manschettenende beabstandet ist, und ferner wobei die Auskehlung des Betätigungselements eine Auskehlungsöffnung (118) aufweist, die zum Verhindern des Eintretens des Flanschs in die Auskehlung dimensioniert ist.

7. Faseroptischer Verbinder nach einem der Ansprüche 2 bis 6, wobei die optische Faser ein Lichtwellenleiter ist, der einen blanken Glasteil (4) und einen Pufferteil (8) aufweist und wobei der faseroptische Verbinder ferner Folgendes umfasst:
eine Ferrule (16), die in dem Verbinderkörper gelagert ist, wobei sich die Ferrule über das vordere Ende des Verbinderkörpers hinaus erstreckt;
einen optischen Faserstummel (24), der an der Ferrule befestigt ist;
eine mechanische Spleißanordnung (28), die mindestens teilweise in dem Verbinderkörper aufgenommen ist,
wobei der optische Faserstummel sich von einem hinteren Ende der Ferrule erstreckt und in der mechanischen Spleißanordnung abschließt, wobei:
die Hülse zum Aufnehmen des Pufferteils des Lichtwellenleiters konfiguriert ist und das mindestens eine Klemmelement zum Anwenden einer Klemmkraft auf den Pufferteil des Lichtwellenleiters bei Betätigung, wenn der Pufferteil des Lichtwellenleiters in der Hülse angeordnet ist, konfiguriert ist.

8. Faseroptischer Verbinder nach Anspruch 7, wobei:
die mechanische Spleißanordnung zum Aufnehmen des blanken Glasteils des Lichtwellenleiters, so dass der blanke Glasteil an ein Ende des optischen Faserstummels angefügt werden kann, konfiguriert ist, und
der Hebel zum Pressen gegen die mechanische Spleißanordnung konfiguriert ist, um die mechanische Spleißanordnung zum sicheren Greifen des optischen Faserstummels und des blanken Glasteils der Lichtleitfaser zu veranlassen, wenn der blanke Glasteil in der mechanischen Spleißanordnung aufgenommen und an das Ende des optischen Faserstummels angefügt worden ist.

9. Faseroptischer Verbinder nach Anspruch 8, wobei der Hebel zum Schwenken von einer ersten Stellung, in der sich der Hebel über die Basis erstreckt, in eine zweite Stellung, in der sich der Hebel von der Basis weg und über die mechanische Spleißanordnung erstreckt, konfiguriert ist.

10. Faseroptischer Verbinder nach Anspruch 8 oder 9, wobei der Hebel des Betätigungselements durch ein Biegescharnier mit der Basis gekoppelt ist, so dass der Hebel und die Basis als einstückige Struktur integriert ausgebildet sind.

11. Faseroptischer Verbinder nach einem der Ansprüche 1 bis 10, wobei die Manschette sowohl in der rückwärtigen Position als auch der vorderen Position mit dem Verbinderkörper gekoppelt ist.

12. Verfahren zur Installation eines faseroptischen Verbinders, der Folgendes aufweist: einen Verbinderkörper (14) mit einem vorderen Ende (18) und einem hinteren Ende (20), eine Hülse (30), die mindestens teilweise in dem Verbinderkörper (14) positioniert ist, eine Manschette (46) mit einem vorderen Teil, der auf der Hülse aufgenommen ist, und einem hinteren Teil (52), der sich über das hintere Ende (20) des Verbinderkörpers (14) hinaus erstreckt, und ein Betätigungselement (100, 200), das eine Basis (102, 202) und einen mit der Basis (102, 202) gekoppelten Hebel (104, 204) umfasst, wobei die Basis des Betätigungselements (100, 200) in einem installierten Zustand auf den hinteren Teil (52) der Manschette (46) und das hintere Ende (20) des Verbinderkörper (14) aufgenommen ist und wobei das Betätigungselement (100, 200) die Manschette (46) im installierten Zustand hindert, sich von einer rückwärtigen Position relativ zu dem Verbinderkörper (14) zu einer vorderen Position relativ zu dem Verbinderkörper (14) zu bewegen, wobei das Verfahren Folgendes umfasst:
Einführen eines Lichtwellenleiters (2) durch die Manschette (46) und in die Hülse (30), wobei die Hülse (30) mindestens ein Klemmelement aufweist, das zum Anwenden einer Klemmkraft auf die optische Faser (2) bei Betätigung durch die Manschette (46), die sich von einer rückwärtigen Position relativ zu dem Verbinderkörper (14) zu einer vorderen Position relativ zu dem Verbinderkörper (14) konfiguriert ist, und wobei das Betätigungselement (100, 200) die Manschette (46) beim Einführen des Lichtwellenleiters (2) hindert, sich von der rückwärtigen Position zu der vorderen Position zu bewegen;
Entfernen des Betätigungselements (100, 200) von dem faseroptischen Verbinder (10); und
Bewegen der Manschette (46) von der rückwärtigen Position zu der vorderen Position, um das mindestens eine Klemmelement zum Anwenden der Klemmkraft auf den Lichtwellenleiter zu veranlassen.

13. Verfahren nach Anspruch 12, wobei der Verbinder ferner Folgendes aufweist: eine Ferrule (16), die in dem Verbinderkörper gelagert ist und sich über das vordere Ende des Verbinderkörpers hinaus erstreckt, einen optischen Faserstummel (24), der an der Ferrule befestigt ist, und eine mechanische Spleißanordnung (28), die mindestens teilweise in dem Verbinderkörper aufgenommen ist, und wobei der optische Faserstummel sich von einem hinteren Ende der Ferrule erstreckt und in der mechanischen Spleißanordnung abschließt, wobei das Verfahren ferner Folgendes umfasst:
Einführen des Lichtwellenleiters in die mechanische Spleißanordnung, so dass er an ein Ende des optischen Faserstummels angefügt wird; und
danach Verwenden des Betätigungselements, um die mechanische Spleißanordnung zum sicheren Greifen des optischen Faserstummels und der Lichtleitfaser zu veranlassen und dadurch eine mechanische Spleißverbindung zwischen dem Ende des optischen Faserstummels und der Lichtleitfaser zu befestigen,
wobei das Betätigungselement nach dem Befestigen der mechanischen Spleißverbindung vom faseroptischen Verbinder entfernt wird.

14. Verfahren nach Anspruch 13, wobei:
die Lichtleitfaser einen blanken Glasteil (4) und einen Pufferteil (8) umfasst;
der blanke Glasteil in die mechanische Spleißanordnung eingeführt wird, so dass er an ein Ende des optischen Faserstummels angefügt wird; und
das mindestens eine Klemmelement bei Betätigung durch die Manschette eine Klemmkraft auf den Pufferteil der Lichtleitfaser ausübt.

15. Verfahren nach Anspruch 14, wobei:
Verwenden des Betätigungselements, um die mechanische Spleißanordnung zum sicheren Greifen des optischen Faserstummels und der Lichtleitfaser zu veranlassen, das Pressen des Hebels gegen die mechanische Spleißanordnung umfasst.

## Revendications

1. Connecteur de fibre optique (10) pour une fibre optique (2), le connecteur de fibre optique comprenant :
un corps de connecteur (14) ayant une extrémité avant (18) et une extrémité arrière (20);
un manchon (46) ayant une partie arrière (52) s'étendant au-delà de l'extrémité arrière (20) du corps de connecteur (14), dans lequel le manchon (46) est configuré pour se déplacer d'une position vers l'arrière par rapport au corps de connecteur (14) à une position vers l'avant par rapport au corps de connecteur (14) ; et
un élément d'actionnement (100, 200) comprenant une base (102, 202) et un levier (104, 204) couplé à la base (102, 202), dans lequel la base de l'élément d'actionnement (100, 200) est reçue sur la partie arrière (52) du manchon (46) et l'extrémité arrière (20) du corps de connecteur (14) à l'état installé, **caractérisé en ce que**
l'élément d'actionnement (100, 200) empêche le manchon (46) de se déplacer de la position vers l'arrière à la position vers l'avant à l'état installé, et **en ce que** l'élément d'actionnement (100, 200) est amovible du manchon (46) pour permettre au manchon (46) de se déplacer de la position vers l'arrière à la position vers l'avant.

2. Connecteur de fibre optique selon la revendication 1, comprenant en outre : une gaine (30) placée au moins partiellement dans le corps de connecteur et configurée pour recevoir la fibre optique, dans lequel la gaine comprend au moins un élément de serrage configuré pour appliquer une force de serrage sur la fibre optique lors de l'actionnement lorsque la fibre optique est mise dans la gaine, et en outre dans lequel :
le manchon comprend en outre une partie avant (50) reçue sur la gaine, et le au moins un membre de serrage de la gaine est configuré pour être actionné par le manchon lorsque le manchon se déplace de la position vers l'arrière à la position vers l'avant.

3. Connecteur de fibre optique selon la revendication 2, dans lequel la partie avant du manchon est reçue sur la gaine dans le corps de connecteur.

4. Connecteur de fibre optique selon l'une quelconque des revendications 1-3, dans lequel l'élément d'actionnement est reçu sur l'extrémité arrière du corps de connecteur et la partie arrière du manchon.

5. Connecteur de fibre optique selon l'une quelconque des revendications 1-4, dans lequel l'élément d'actionnement comprend un côté inférieur (108) et définit une rainure (106) qui est ouverte sur le côté inférieur pour permettre de recevoir l'élément d'actionnement sur la partie arrière au moins du manchon.

6. Connecteur de fibre optique selon la revendication 5, dans lequel la partie arrière du manchon définit une extrémité arrière du manchon (54) et comprend une bride (120) qui est espacée de l'extrémité arrière du manchon, et en outre dans lequel la rainure de l'élément d'actionnement comprend une ouverture de rainure (118) qui est dimensionnée pour empêcher la bride d'entrer dans la rainure.

7. Connecteur de fibre optique selon l'une quelconque des revendications 2-6, dans lequel la fibre optique est une fibre optique de câble qui comprend une partie en verre nu (4) et une partie tampon (8), et où le connecteur de fibre optique comprend en outre :
une ferrule (16) soutenue dans le corps de connecteur, dans lequel la ferrule s'étend au-delà de l'extrémité avant du corps de connecteur ;
un tronçon de fibre optique fixé à la ferrule :
un ensemble d'épissure mécanique (28) au moins partiellement reçu dans le corps de connecteur,
dans lequel le tronçon de fibre optique s'étend de l'arrière de la ferrule et se termine dans l'ensemble d'épissure mécanique, dans lequel :
la gaine est configurée pour recevoir la partie tampon de la fibre optique de câble et le au moins un élément de serrage est configuré pour appliquer une force de serrage à la partie tampon de la fibre optique de câble lors de l'actionnement lorsque la partie tampon de la fibre optique de câble est mise dans la gaine.

8. Connecteur de fibre optique selon la revendication 7, dans lequel :
l'ensemble d'épissure mécanique est configuré pour recevoir la partie en verre nu de la fibre optique de câble de sorte que la partie en verre nu peut abouter une extrémité du tronçon de fibre optique ; et
le levier est configuré pour appuyer contre l'ensemble d'épissure mécanique pour faire que l'ensemble d'épissure mécanique saisisse solidement le tronçon de fibre optique et la partie en verre nu de la fibre optique de câble lorsque la partie en verre nu est reçue dans l'ensemble d'épissure mécanique et aboutée à l'extrémité du tronçon de fibre optique.

9. Connecteur de fibre optique selon la revendication 8, dans lequel le levier est configuré pour pivoter par rapport à la base d'une première position dans laquelle le levier s'étend sur la base à une deuxième position dans laquelle le levier s'étend à l'écart de la base et sur l'ensemble d'épissure mécanique.

10. Connecteur de fibre optique selon la revendication 8 ou 9, dans lequel le levier de l'élément d'actionnement est couplé à la base par une charnière mobile de sorte que le levier et la base sont intégralement formés en une structure unitaire.

11. Connecteur de fibre optique selon l'une quelconque des revendications 1-10, dans lequel le manchon est couplé au corps de connecteur dans la position vers l'arrière et dans la position vers l'avant.

12. Procédé d'installation d'un connecteur de fibre optique qui comprend un corps de connecteur (14) ayant une extrémité avant (18) et une extrémité arrière (20), une gaine (30) placée au moins partiellement dans le corps de connecteur (14), un manchon (46) ayant une partie avant reçue sur la gaine (30) et une partie arrière (52) s'étendant au-delà de l'extrémité arrière (20) du corps de connecteur (14), et un élément d'actionnement (100, 200) comprenant une base (102, 202) et un levier (104, 204) couplé à la base (102, 202), dans lequel la base de l'élément d'actionnement (100, 200) est reçue sur la partie arrière (52) du manchon (46) et l'extrémité arrière (20) du corps de connecteur (14) à l'état installé, et dans lequel l'élément d'actionnement (100, 200) empêche le manchon (46) de se déplacer d'une position vers l'arrière par rapport au corps de connecteur (14) à une position vers l'avant par rapport au corps de connecteur (14) à l'état installé, le procédé comprenant :
insérer une fibre optique de câble (2) à travers le manchon (46) et dans la gaine (30), dans lequel la gaine (30) comprend au moins un élément de serrage configuré pour appliquer une force de serrage à la fibre optique (2) lors de l'actionnement par le manchon (46) se déplaçant d'une position vers l'arrière par rapport au corps de connecteur (14) à une position vers l'avant par rapport au corps de connecteur (14), et dans lequel l'élément d'actionnement (100, 200) empêche le manchon (46) de se déplacer de la position vers l'arrière à la position vers l'avant pendant l'insertion de la fibre optique de câble (2) ;
retirer l'élément d'actionnement (100, 200) du connecteur de fibre optique (10) ; et
déplacer le manchon (46) de la position vers l'arrière à la position vers l'avant pour faire que le au moins un élément de serrage applique la force de serrage à la fibre optique de câble.

13. Procédé selon la revendication 12, dans lequel le connecteur comprend en outre une ferrule (16) soutenue dans le corps de connecteur et s'étendant au-delà de l'extrémité avant du corps de connecteur, un tronçon de fibre optique (24) fixé à la ferrule, et un ensemble d'épissure mécanique (28) au moins partiellement reçu dans le corps de connecteur, et dans lequel le tronçon de fibre optique s'étend de l'arrière de la ferrule et se termine dans l'ensemble d'épissure mécanique, le procédé comprenant en outre :
insérer la fibre optique de câble dans l'ensemble d'épissure mécanique pour abouter une extrémité du tronçon de fibre optique ; et
ensuite, en utilisant l'élément d'actionnement pour faire que l'ensemble d'épissure mécanique saisisse solidement le tronçon de fibre optique et la fibre optique de câble et fixer ainsi une épissure mécanique entre l'extrémité du tronçon de fibre optique et la fibre optique de câble,
dans lequel l'élément d'actionnement est retiré du connecteur de fibre optique après avoir fixé l'épissure mécanique.

14. Procédé selon la revendication 13, dans lequel :
la fibre optique de câble comprend une partie en verre nu (4) et une partie tampon (8) ;
la partie en verre nu est insérée dans l'ensemble d'épissure mécanique pour abouter l'extrémité du tronçon de fibre optique ; et
le au moins un élément de serrage applique une force de serrage à la partie tampon de la fibre optique de câble lors de l'actionnement par le manchon.

15. Procédé selon la revendication 14, dans lequel :
utiliser l'élément d'actionnement pour faire que l'ensemble d'épissure mécanique saisisse solidement le tronçon de fibre optique et la fibre optique de câble comprend appuyer le levier contre l'ensemble d'épissure mécanique.
